# EUROPÄISCHE PATENTSCHRIFT

(11) **EP 1 118 600 B1**
(45) Veröffentlichungstag und Bekanntmachung des Hinweises auf die Patenterteilung: **23.02.2005**
(21) Anmeldenummer: 00811187.4
(22) Anmeldetag: 13.12.2000
(51) Int. Cl.: C04B 28/00

(54) **Verfahren zur Herstellung eines Lehm-Baustoffs und Lehm-Baustoff**
Building material comprising clay and method of producing the same
Matériau de construction à base d'argile et procédé de sa fabrication

(30) Priorität: 13.12.1999 EP 99811155
(43) Veröffentlichungstag der Anmeldung: 25.07.2001
(73) Patentinhaber: Ziegelei Oberdiessbach AG, 3672 Oberdiessbach (CH)
(72) Erfinder: Döhring, Lothar, 5317 Hettenschwil (CH); von Gunten, Anton, Dr.rer.nat., 3672 Oberdiessbach (CH); von Gunten, Erwin, 3672 Oberdiessbach (CH)
(74) Vertreter: Roshardt, Werner Alfred, Dipl.-Phys.

(56) Entgegenhaltungen:
- DE-A- 19 524 326
- DE-A- 19 542 676

## Beschreibung

### Technisches Gebiet

Die vorliegende Erfindung betrifft einen Baustoff auf der Basis von Lehm und Zement zur Verwendung im Bauwesen und ein Verfahren zur Herstellung eines solchen Baustoffs.

### Stand der Technik

Ungebrannter Lehm findet seit alters her Verwendung als Baustoff für den Bau von Gebäuden, vorwiegend in regenarmen Gebieten. Gegenüber moderneren Baustoffen wie Backsteinen aus gebranntem Lehm, Beton, Glas, Metall, behandeltem Holz und verschiedenen Kunststoffen weist ungebrannter Lehm sowohl in ökologischer als auch in gesundheitlicher Hinsicht einige Vorteile auf. Lehm ist ein geologisches Endprodukt, das sich weder zersetzt noch chemisch reaktiv ist und als völlig schadstofffrei gilt. Lehm wird in verschiedenen Verfahren sogar als Heilmittel eingesetzt. Zudem ist bekannt, dass ungebrannter Lehm eine in bauhygienischer Hinsicht erwünschte bakteriostatische Wirkung besitzt und überdies aufgrund seiner Absorptionsfähigkeit verschiedene anorganische Schadstoffe und/oder organische Allergene wie Milbenextrakte, Pollen, Schimmelpilzsporen etc. zu binden und somit deren gesundheitsschädigende Wirkung zu vermindern vermag.

In bauphysikalischer Hinsicht weist ungebrannter Lehm jedoch etliche Nachteile gegenüber den heute in technisierten Ländern gebräuchlichen Baustoffen auf, wobei insbesondere die vergleichsweise geringe Festigkeit von aus ungebranntem Lehm gefertigten Bauteilen sowie die fehlende Wasserfestigkeit und die mangelnde Frostbeständigkeit derselben zu erwähnen sind.

In der Druckschrift CN 1 082 010 wird ein Ziegelstein beschrieben, der aus einer Mischung aus 70 - 80% Lehm und 20 - 30% Sulfathüttenzement (ein klinkerfreier hydraulischer Zement) hergestellt ist. Im Unterschied zu einem konventionellen Backstein ist zur Herstellung dieses Ziegelsteins kein Brennprozess erforderlich, sondern ein ungefähr 6.5 bis 8 Stunden dauerndes Dampfhärtungsverfahren. Der für das Dampfhärtungsverfahren gemäss CN 1 082 010 benötigte Energiebedarf ist zwar etwas kleiner als der Energiebedarf für einen Brennprozess zur Herstellung eines konventionellen Backsteins. Die pro Ziegelstein benötigte Energie ist jedoch immer noch beträchtlich.

Um das energie- und zeitaufwendige Dampfhärtungsverfahren abzukürzen oder gar ganz zu vermeiden, wird in der Druckschrift CN 1 121 494 vorgeschlagen, einer Mischung gemäss der obengenannten Druckschrift CN 1 082 010 2.5 - 3% eines Früh-Festigkeitsbilders beizumischen, der die Salze Aluminiumchlorid, Ammoniumchlorid, Alkalichlorid, Erdalkalichlorid, Kalziumhydroxid, Kalziumsulfat, Magnesiumkarbonat, Natriumkarbonat und Natriumsilikat enthält. Während aufgrund der Beimischung des Früh-Festigkeitsbilders der Energiebedarf für die Herstellung von Ziegelsteinen vermindert werden kann, erweist sich der dadurch verursachte hohe Chloridgehalt als problematisch im Hinblick auf die Korrosion von Stahlarmierungen und Eisenteilen, die in Kontakt mit den Ziegelsteinen kommen oder auch nur in deren Nähe angeordnet sind. Zudem führt der hohe Gehalt an löslichen Salzen zu unerwünschten Salzausblühungen und damit verbundenen Beschädigungen im Aussenbereich der Ziegelsteine.

In der amerikanischen Patentschrift US 4 309 325 wird ein insbesondere zur Herstellung von Skulpturen geeigneter Mörtel auf der Basis von Lehm und Zement beschrieben. Um ein Erstarren des Mörtels ohne Rissbildung zu gewährleisten, weist er weiter einen polymer- und einen formaldehydhaltigen Zusatz auf, welche den Mörtel für die Anwendung als Baustoff erheblich verteuern und für den Wohnbereich wegen der gesundheitsschädlichen Wirkung von Formaldehyd ungeeignet machen.

Gemäss der veröffentlichten europäischen Patentanmeldung EP 751 267 enthält ein Baustoff auf der Basis von Lehm und/oder Zement Naturfasern wie Stroh oder Gräserhalmen zur Armierung von aus dem Baustoff gefertigten Bauteilen. Um die Fasern haltbar zu machen, werden sie mit modifizierten Bindemitteln und Katalysatoren umhüllt und konserviert. Dies ist mit erheblichen Kosten verbunden.

In der Druckschrift DE 41 32 009 wird ein Baustoff für den Lehmbau beschrieben, der im Wesentlichen aus Lehm, Wasser, einem quellfähigen Isolationsmaterial, einem hydraulischen Bindemittel wie z.B. Zement und einem Abbindebeschleuniger besteht.

In der deutschen Offenlegungsschrift DE 195 42 676 wird eine Mörtelmischung auf der Basis von Lehm beschrieben. Zur Herstellung der Mörtelmischung wird zunächst aus Lehm, Wasser und Füllstoffen eine bildsame Mischung hergestellt. Anschliessend wird dieser Mischung kurz vor der Verarbeitung ein zementhaltiges Härtemittel und als Abbindebeschleuniger ein Verflüssigungsmittel für Lehm zugemischt. Als Abbindebeschleuniger kann ein Alkalisilikat, insbesondere Natronwasserglas verwendet werden.

Die Druckschrift DE 195 24 326 befasst sich mit einem Verfahren zur Wiederverwendung von Aushubmaterial. Ausgehobener Erde von Bauprojekten wird ein verfestigender Anteil eines hydraulischen Materials (z. B. Zement), ein verflüssigender Anteil Wasser und ein erstes Zusatzmittel auf der Basis von Hydroxycarbonsäuren, Phoshonsäure und/oder Sacchariden beigemischt. Danach wird dieser Mischung vor dem Einsetzen des Abbindens des hydraulischen Materials ein Zement-Dispergiermittel zugegeben.

Es hat sich gezeigt, dass die kontinuierliche Verformung bzw. Verarbeitung von plastischen Massen, die nassen Lehm und hydraulische Bindemittel enthalten, mitunter sehr problematisch ist, weil die Lehmbaumischung vom Zeitpunkt an, da der feuchte Lehm mit dem Zement in Kontakt kommt, durch spontane Wasseraufnahme (Hydratation) einiger Zementbestandteile ständig steifer wird. Die Hydratationsreaktion ist mit einer Wärmeentwicklung verbunden, welche ihrerseits die Geschwindigkeit der Hydratation erhöht. Dies ist insbesondere bei einer verformenden Verarbeitung der plastischen Masse, z.B. bei einer Verarbeitung mittels Extrudierens der Masse problematisch, weil dann die Verformung der angesteiften Masse aufgrund erhöhter Scherkräfte eine weitere Erwärmung der Masse verursacht, welche wiederum die Hydratation der Zementbestandteile beschleunigt. Dies kann zu einem Verstopfen von Extrudiervorrichtungen (auch als Extruder bezeichnet) führen.

Die vorzeitige Versteifung der Lehmbaumasse während ihrer Verarbeitung könnte zwar durch Beimischung von bekannten Erstarrungsverzögerern unterbunden werden. Dies hätte jedoch zur Folge, dass die Lehmbaumasse nach ihrer Verarbeitung viel zu langsam erhärten würde. Die verlängerte Aushärtphase hätte einen erhöhten Wasserverlust während des Aushärtens zur Folge, was im Falle von Bauteilen, die aus einer solchen Lehmbaumasse hergestellt wurden, die Gefahr der Schwindrissbildung erheblich erhöhen würde.

### Darstellung der Erfindung

Aufgabe der Erfindung ist die Angabe eines ökologisch unbedenklichen und preiswerten Baustoffs auf der Basis von Lehm und Zement, der insbesondere auch zur Herstellung von Bauteilen geeignet ist, die in bauphysikalischer Hinsicht zeitgemässen Anforderungen genügen sowie die Angabe eines Verfahrens zur Herstellung eines solchen Baustoffs.

Die Lösung der Aufgabe ist durch die Merkmale der unabhängigen Patentansprüche definiert. Erfindungsgemäss wird zur Herstellung eines hydraulisch erhärtenden Baustoffs auf der Basis von Lehm und Zement zunächst in einem ersten Schritt ein hydraulischer Zement in einem wässrigen Fliessmittel suspendiert, worauf in einem zweiten Schritt die Zementsuspension einem feuchten Lehm beigemischt und in diesem homogen verteilt wird.

Unter Lehm ist ein Gemisch aus Ton, Schluff (d.h. Feinstsand) und Sand zu verstehen, das Beimengungen von grösseren Gesteinspartikeln (Kies, Gestein) sowie von organischem Material enthalten kann. Im Lehm wirkt der im Wesentlichen aus den sogenannten Tonmineralien zusammengesetzte Ton als Bindemittel. Ausserdem kommt Lehm auch mit Kalk vermischt vor, den man dann Mergel nennt. Schluff, Sand und Kies sind nur Füllstoffe.

Je nach Tonanteil spricht man von fettem Lehm (ca. zwei Drittel Tonanteil), lehmigem Ton (ca. 50% Tonanteil), tonigem Lehm (ca. ein Drittel Lehmanteil), gewöhnlichem Lehm (ca. 20% Tonanteil) und sandigem Lehm (ca. 10% Tonanteil). Sämtliche dieser Lehmtypen können als Lehm zur Herstellung eines Baustoffs gemäss der Erfindung verwendet werden. Zu diesem Zweck kann sogar ein Lehm mit einem Anteil von bloss 5 - 10 Gew.% an Tonmineralien verwendet werden.

Gemäss der Erfindung ist als Lehmkomponente sowohl aus natürlichen Lehmlagerstätten abgebauter Lehm als auch anderweitig gewonnener Lehm verwendbar. Insbesondere ist auch Lehm gemäss obiger Definition verwendbar, der aus bei der Kieswäsche anfallenden Abfallprodukten aufbereitet wurde.

Unter einem hydraulischen Zement wird ein im Wesentlichen aus mineralischen Stoffen zusammengesetztes Bindemittel verstanden, das unter Wasseraufnahme an Luft und selbst unter Wasser steinartig erhärtet und nach dem Aushärten wasserbeständig ist. Zur Herstellung eines Baustoffs gemäss der Erfindung sind unter anderem Portlandzement, Hochofenzement, Flugaschezement, Trasszement, Ölschieferzement, Tonerdeschmelzzement, Ferrarizement, Weisszement oder hydraulischer Kalk, je allein oder in Kombination miteinander, geeignet.

Das wässrige Fliessmittel, in welchem beim Herstellungsverfahren gemäss der Erfindung der Zement suspendiert wird, kann z.B. einen Trockengehalt von 25 - 30 Gew.% (bezogen auf das Fliessmittel) aufweisen, d.h. der wasserlösliche Feststoffgehalt des wässrigen Fliessmittels beträgt 25 - 30 Gew.%. Grundsätzlich ist jedoch auch die Verwendung von wässrigen Fliessmitteln mit anderen Trockengehältern möglich.

Durch das Suspendieren des Zements in einem wässrigen Fliessmittel werden die Zementkörner mit hydratationsverzögernden Komponenten umhüllt und dadurch auch nach dem Beimischen in den feuchten Lehm für einige Zeit vor einer Reaktion mit Wasser geschützt. Typischerweise wird das Einsetzen des Ansteifens des Lehm-Zement-Baustoffs um etwa zwei Stunden verzögert. Während dieser Zeit kann der Baustoff problemlos auch in einem Extruder verarbeitet werden, ohne dass die Gefahr eines Verstopfens des Extruders besteht. Nach dem Einsetzen des Ansteifens bzw. des Aushärtens erfolgt das Aushärten mit normaler Aushärtgeschwindigkeit, d.h., das Aushärten wird durch die vorgänige Suspension des Zements im wässrigen Fliessmittel nicht wesentlich verlangsamt. Dadurch wird auch die Gefahr der Schwindrissbildung nicht wesentlich erhöht.

Durch die Dispergierung des Zements in dem wässrigen Fliessmittel werden ebenfalls seine während der Lagerung gebildeten Korn-Agglomerate aufgelöst, wodurch die einzelnen Zementkörnchen zusätzlich ihre Binde-Wirkung in der Lehmbaumasse viel besser entfalten können.

Vorzugsweise wird als Lehmkomponente zur Herstellung eines Lehm-Baustoffs nach dem erfindungsgemässen Verfahren ein feuchter Lehm mit einem Wassergehalt von 25 Gew.% oder weniger, insbesondere sogar ein solcher mit einem Wassergehalt von weniger als 20 Gew.% verwendet. Es wird jedoch bevorzugt, dass der Wassergehalt des Lehms wenigstens 10 Gew.% oder mehr, insbesondere sogar mehr als 15 Gew.% beträgt.

Da Lehm üblicherweise in erdfeuchtem Zustand abgebaut wird, bringt die Herstellung eines erfindungsgemässen Baustoffs aus solchem Lehm den Vorteil mit sich, dass zur Baustoffherstellung vergleichsweise wenig Energie erforderlich ist, weil keine Energie zum Trocknen des Lehms aufgewendet werden muss. Der Baustoff liegt in diesem Fall nach seiner Herstellung gleich in einem feuchten, verarbeitungsfähigen, plastischen Zustand vor, wobei wenigstens ein Teil des Wassergehalts dieses Baustoffs aus dem im feuchten Lehm enthaltenen Wasser stammt.

Als wässriges Fliessmittel zur Durchführung des erfindungsgemässen Herstellungsverfahrens kann irgend ein als Fliessmittel in der zementverarbeitenden Industrie gebräuchliches Additiv verwendet werden. Dieses Fliessmittel, in welchem der Zement suspendiert wird, kann z.B. einen Trockengehalt von 25 - 30 Gew.% (bezogen auf das Fliessmittel) aufweisen, d.h. der wasserlösliche Feststoffgehalt des wässrigen Fliessmittels beträgt dann 25 - 30 Gew.% (bezogen auf das Fliessmittel). Grundsätzlich ist jedoch auch die Verwendung von wässrigen Fliessmitteln mit anderen Trockengehältern möglich.

Vorzugsweise wird ein Fliessmittel verwendet, das die ökologischen Vorzüge des Lehms in keiner Weise beeinträchtigt. Es kann z.B. ein Fliessmittel verwendet werden, das in der zementverarbeitenden Industrie als Betonverflüssiger bekannt ist. Ein geeignetes Fliessmittel kann z.B. aus der Gruppe von sulfonierten oder nicht sulfonierten Vinylcopolymeren, sulfonierten Polymeren, Gluconsäure, Ligninsulfonat, Triäthanolamin, Glycerin, Polyethylenglykol, Oleat, Polysorbitan, Weinsäure, Phosphaten, Alkyläthoxylat, Polycarboxyläther, Gelatinepulver, oxidativ hydrolisierter Gelatine, Sorbitan-Palmitat-Äthoxylat oder in Gluconsäure gelöstem Natriumaluminat ausgewählt werden. Zur Verwendung im erfindungsgemässen Herstellungsverfahren gut geeignet sind Fliessmittel aus Vinyl-Polymerisaten mit Pyrrolidon-, Alkohol-, Carboxyl-, aromatischen Sulfonsäuren- bzw. Carboxyläther-Gruppen, Polycarboxylaten und Acrylaten. Ein zur Verwendung für das Herstellungsverfahren gemäss der Erfindung geeignetes Fliessmittel auf der Basis eines Vinylpolymerisats ist z.B. ein Betonverflüssiger, der von der Firma Sika AG unter der Bezeichnung Sikament 500 vertrieben wird. Auch geeignet ist der von der Firma MBT unter der Bezeichnung Glenium 21 vertriebene Betonverflüssiger auf der Basis von Polycarboxyläther.

In einer Variante des erfindungsgemässen Herstellungsverfahrens wird dem wässrigen Fliessmittel oder der Zementsuspension vor dem Beimischen zum Lehm ein Abbindeverzögerer beigemischt, wobei der Anteil des Abbindeverzögerers vorzugsweise 0.2 - 5 Gew.% bezogen auf den Zementanteil beträgt. Diese Variante ist besonders bei Zementen vorteilhaft, die zu einem raschen Ansteifen neigen. Es kann irgend ein handelsüblicher, aus einer oder mehreren Komponenten bestehender Abbindeverzögerer verwendet werden. Aufgrund des Suspendieren des Zements im wässrigen Fliessmittel sind bereits vergleichsweise kleine Konzentrationen von Abbindeverzögerern ausreichend, um die erwünschte Wirkung zu erzielen, so dass die Erhärtungsgeschwindigkeit des Baustoffs nach seiner Verarbeitung durch den Abbindeverzögerer nicht wesentlich beeinträchtigt wird.

Gemäss der Erfindung enthält ein hydraulisch erhärtender Baustoff auf der Basis von Lehm und Zement in einem verarbeitungsfähigen, plastischen Zustand Lehm mit einem auf den Baustoff bezogenen Trockengehalt von 66 - 93 Gew.%, 2 - 20 Gew.% hydraulischen Zement, 7 - 25 Gew.%, vorzugsweise 9 - 21 Gew.% Wasser und wenigstens ein Fliessmittel mit einem auf den Baustoff bezogenen Trockengehalt von 0.1 - 5 Gew.%, vorzugsweise 0.2 - 3 Gew.%, insbesondere 0.4 - 2 Gew.%. Vorzugsweise wird zur Herstellung dieses Baustoffs zunächst in einem ersten Schritt der Zement im wässrigen Fliessmittel suspendiert, worauf in einem zweiten Schritt die Zementsuspension dem Lehm beigemischt und in diesem homogen verteilt wird.

Der erfindungsgemässe Baustoff besteht im Wesentlichen aus den in ökologischer und bauhygienischer Hinsicht unbedenklichen und zudem preiswerten Komponenten Lehm, Zement und Wasser sowie einem geringen Anteil eines Fliessmittels. Der Zementanteil bewirkt ein hydraulisches Erhärten des Baustoffs. Dieser lässt sich deshalb ohne grossen Energieaufwand für Bauzwecke verwenden. Insbesondere ist zur Herstellung von Bauteilen aus dem erfindungsgemässen Baustoff weder ein Brennprozess noch ein Trocknungsprozess oder ein Dampfhärtungsverfahren erforderlich. Der Fliessmittelanteil ermöglicht eine gute Verformbarkeit des erfindungsgemässen Baustoffs.

Ausserdem trägt der erfindungsgemässe Baustoff dem Prinzip der Nachhaltigkeit Rechnung, insofern als er einerseits als zeitgemässes, preiswertes Produkt erheblichen Nutzen bringt und andrerseits weder seine Herstellung noch seine Anwendung oder seine Entsorgung zu einem übermässigen Verbrauch an Ressourcen führen, sondern diese für künftige Generationen schonen. Anstelle einer Entsorgung des Baustoffs kann dieser sogar vollständig zur Herstellung eines neuen Baustoffs wiederverwendet werden.

Der erfindungsgemässe Baustoff ist unter anderem als plastische Masse, Mörtel, Fugenmörtel, Putz oder Kleber verwendbar. Er ist insbesondere auch als plastische Masse für die Herstellung von maschinell vorgefertigten Bauteilen wie z.B. Bausteinen oder Verblendelementen verwendbar. Überraschenderweise hat sich nämlich gezeigt, dass mit dem erfindungsgemässen Baustoff trotz seines vergleichsweise kleinen Zementanteils Bauteile herstellbar sind, die in bauphysikalischer Hinsicht zeitgemässen Anforderungen zu genügen vermögen. Die Verarbeitung eines plastischen Baustoffs gemäss der Erfindung zu Bauteilen kann z.B. durch Extrudieren, Pressen, Schlagpressen, Vibrationspressen, Giessen, Filterpressen, Strangpressen, Schleudern, Spritzen (Gunitieren), Injizieren, Walzen, Modellieren und/oder Beschichten erfolgen. Ein putz- oder kleberförmiger Baustoff gemäss der Erfindung kann z.B. durch Auftragen, Pumpen, Anwerfen, Spritzen, Pinseln, Rollen, Tauchen oder Taloschieren appliziert werden.

Vorzugsweise wird als Lehmkomponente zur Herstellung des erfindungsgemässen Baustoffs ein feuchter Lehm mit einem Wassergehalt von 10 - 25 Gew.%, insbesondere von 15 - 21 Gew.% (bezogen auf den feuchten Lehm) verwendet. Da Lehm üblicherweise in erdfeuchtem Zustand abgebaut wird, bringt die Herstellung eines erfindungsgemässen Baustoffs aus solchem Lehm den Vorteil mit sich, dass zur Baustoffherstellung vergleichsweise wenig Energie erforderlich ist. Der Baustoff liegt in diesem Fall nach seiner Herstellung gleich in einem feuchten, verarbeitungsfähigen, plastischen Zustand vor, wobei ein wesentlicher Teil des Wassergehalts dieses Baustoffs aus dem im feuchten Lehm enthaltenen Wasser stammt.

Als Fliessmittel für den erfindungsgemässen Baustoff kann irgendein in der zementverarbeitenden Industrie gebräuchliches Additiv, beispielsweise ein gebräuchlicher Betonverflüssiger, verwendet werden. Vorzugsweise wird ein Fliessmittel verwendet, das die ökologischen Vorzüge des Lehms in keiner Weise beeinträchtigt. Ein geeignetes Fliessmittel kann z.B. aus der Gruppe von sulfonierten oder nicht sulfonierten Vinylcopolymeren, sulfonierten Polymeren, Gluconsäure, Ligninsulfonat, Triäthanolamin, Glycerin, Polyethylenglykol, Oleat, Polysorbitan, Weinsäure, Phosphaten, Alkyläthoxylat, Polycarboxyläther, Gelatinepulver, oxidativ hydrolisierter Gelatine, Sorbitan-Palmitat-Äthoxylat oder in Gluconsäure gelöstem Natriumaluminat ausgewählt werden. Zur Verwendung im erfindungsgemässen Baustoff gut geeignet sind Fliessmittel aus Vinyl-Polymerisaten mit Pyrrolidon-, Alkohol-, Carboxyl-, aromatischen Sulfonsäuren- bzw. Carboxyläther-Gruppen, Polycarboxylaten und Acrylaten. Ein zur Verwendung im erfindungsgemässen Baustoff geeignetes Fliessmittel auf der Basis eines Vinylpolymerisats ist z.B. ein Betonverflüssiger, der von der Firma Sika AG unter der Bezeichnung Sikament 500 vertrieben wird. Auch geeignet ist der von der Firma MBT unter der Bezeichnung Glenium 21 vertriebene Betonverflüssiger auf der Basis von Polycarboxyläther.

Der vergleichsweise kleine Anteil des Zements von 20 Gew.% oder weniger im erfindungsgemässen Baustoff erweist sich als besonders vorteilhaft, wenn der Baustoff zu Armierungs- und/oder Isolationszwecken weiter organische Fasern, insbesondere pflanzliche Zellulosefasern, enthält. Bei bisher bekannten Baustoffen auf der Basis von Lehm und Zement war es nämlich erforderlich, solche Fasern wie z.B. Stroh gegen Angriffe durch die Alkalien des Zements mittels besonderer Massnahmen zu schützen, wie es z.B. in der Druckschrift EP 751 267 beschrieben ist. Aufgrund zahlreicher Versuche im Zusammenhang mit der vorliegenden Erfindung hat sich nun überraschenderweise gezeigt, dass mit einer Reduktion des Zementanteils im Baustoff eine weit überproportionale Reduktion der Konzentration der im Baustoff gelösten Alkalien einhergeht. Im Falle eines im Wesentlichen aus Lehm und Zement bestehenden Baustoffs hat z.B. die Reduktion des Zementanteils von 30 Gew.% auf 10 Gew.% zu einer Reduktion der Konzentration der im Baustoff gelösten Alkalien auf weniger als 1/100 ihres ursprünglichen Wertes geführt. Der erfindungsgemässe Baustoff ermöglicht deshalb die Verwendung von Fasern zu Armierungs- und/oder Isolationszwecken, wobei auf jeglichen Schutz der Faserstoffe wie z.B. durch Imprägnierung, Hydrophobierung, Modifizierung der Bindemittel mittels Katalysatoren etc. verzichtet werden kann, selbst wenn es sich um organische Fasern, insbesondere sogar um pflanzliche Fasern handelt.

Gemäss einer bevorzugten Erfindungsvariante beträgt der Anteil des Zementes im erfindungsgemässen Baustoff weniger als 15 Gew.%. Vorzugsweise ist er sogar kleiner als 10 Gew.%, insbesondere sogar kleiner als 7 Gew.%. Bevorzugt wird jedoch ein Zementanteil von mehr als 3 Gew.%, vorzugsweise sogar von mehr als 4 Gew.%, insbesondere sogar von mehr als 5 Gew.%.

Vorzugsweise besteht die Zementkomponente des erfindungsgemässen Baustoffs aus Portlandzement. Dieser ist als Zement für das Bauwesen weit verbreitet und zeichnet sich durch gute bauphysikalische Eigenschaften aus.

Ein erfindungsgemässer Baustoff kann zusätzlich organische und/oder anorganische Fasern und/oder Füllstoff enthalten, wobei der Faser- bzw. Füllstoffanteil 0.1 - 15 Gew.%, vorzugsweise 1 - 8 Gew.% betragen kann. Vorzugsweise beträgt der Faser- bzw. Füllstoffanteil mehr als 2 Gew.%, insbesondere sogar mehr als 4 Gew.%. Dank der Beimischung von Fasern und/oder Füllstoff können die bauphysikalischen Eigenschaften von aus dem erfindungsgemässen Baustoff gefertigten Bauteilen verbessert werden. Insbesondere kann mittels einer Faserarmierung die Festigkeit der Bauteile erhöht und ihre Anfälligkeit auf Schwindrissbildung reduziert werden. Durch Beimischen von Füllstoff kann die Isolationsfähigkeit des Baustoffs erhöht und sein spezifisches Gewicht vermindert werden. Als Fasern und/oder Füllstoff für den Baustoff gemäss dieser Erfindungsvariante sind unter anderem organische Fasern wie Häcksel, Schäben von Flachs, Hülsen von Getreide- oder Grassamen, Stroh, Schilf, Chinaschilf, Gras, Nadeln, Holzhackschnitzel, Sägemehl, Sägespäne, Baumwoll-, Hanf-, Sisal-, Nessel-, Leinen-, Zellulose oder Papierfasern geeignet. Aber auch anorganische Fasern oder Füllstoffe wie z.B. Glas-, keramische und/oder mineralische Fasern, Steinwolle, Magnesiumsilikate oder Kohlenstofffasem sowie Fasergemische aus verschiedenen Fasern sind für den Baustoff gemäss dieser Erfindungsvariante geeignet.

Gemäss einer weiteren bevorzugten Variante der Erfindung enthält der Baustoff lediglich Komponenten, die in ökologischer Hinsicht unbedenklich und frei von jeglichen im Wohnbereich toxisch wirkenden Stoffen, insbesondere formaldehydfrei sind. Als in ökologischer Hinsicht unbedenklich werden im vorliegenden Zusammenhang diejenigen Stoffe bezeichnet, von denen bei einer Verwendung als Baustoff keine gesundheitsschädliche Wirkung bekannt ist und die ohne Probleme entsorgt und/oder wiederverwertet werden können. So gehören insbesondere ungebrannter Lehm und Zement zu den in ökologischer Hinsicht unbedenklichen Stoffen.

Gemäss einem weiteren Aspekt der Erfindung ist ein Bauteil aus einem Baustoff gefertigt, der aus einer Mischung hergestellt ist, die folgende Zusammensetzung aufweist:
Lehm mit einem auf den Baustoff bezogenen Trockengehalt von 66 - 93 Gew.%;
2 - 20 Gew.% hydraulischer Zement;
7 - 25 Gew.%, vorzugsweise 9 - 21 Gew.% Wasser;
wenigstens ein Fliessmittel mit einem auf den Baustoff bezogenen Trockengehalt von 0.1 - 5 Gew.%, vorzugsweise 0.2 - 3 Gew.%, insbesondere 0.4 - 2 Gew.%;
0 - 15 Gew.% organische und/oder anorganische Fasern und/oder Füllstoff.

Vorzugsweise umfasst das Verfahren zur Herstellung des Bauteils einen Verfahrensschritt, in welchem der Baustoff mittels einer Extrudiervorrichtung bzw. eines Extruders extrudiert wird. Grundsätzlich sind jedoch auch andere Verfahren zur Herstellung des Bauteils möglich.

Zur Herstellung eines solchen Bauteils kann der Baustoff in einer gekühlten Extrudiervorrichtung bzw. in einem gekühlten Extruder verarbeitet werden. Der Extruder kann z.B. auf 15 °C oder kühler gekühlt sein. Durch das Kühlen des Extruders kann die Geschwindigkeit der Hydratation des Zements und somit das vorzeitige Ansteifen des Baustoffs weiter vermindert werden. Die Verarbeitung des Baustoffs in einem gekühlten Extruder erweist sich auch bei der Verwendung von anderen Baustoffen auf der Basis von Lehm und Zement als vorteilhaft, um ein vorzeitiges Ansteifen des Baustoffs zu verhindern. Zum Extrudieren des Baustoffs kann ein Extruder mit einem kühlbaren Mantel und/oder einer kühlbaren Schnecke verwendet werden. Vorteilhafterweise wird die Temperatur im Extruder weiter derart reguliert, dass keine Temperaturdifferenzen zwischen der Förderschnecke und dem Mantel bestehen.

Vorzugsweise wird das der Baustoff im Bereich der Austrittsöffnung des Extruders (d.h. nach der Formung des Bauteils) geheizt, um das anschliessende Aushärten des extrudierten Bauteils zu beschleunigen. Für diesen Zweck kann z.B. die Austrittsöffnung des Extruders (auch als Mundstück bezeichnet) geheizt werden, oder es kann eine separate Heizvorrichtung im Bereich dieser Austrittsöffnung vorgesehen sein.

Nach der Herstellung werden die Bauteile vorteilhafterweise in einer Umgebung mit einer regulierten Feuchtigkeit ausgehärtet. Dadurch kann die Gefahr der Schwindrissbildung weiter vermindert werden. Grundsätzlich kann das Aushärten jedoch auch in normaler Umgebungsluft erfolgen.

Aus den nachfolgenden Ausführungsbeispielen und der Gesamtheit der Patentansprüche ergeben sich weitere vorteilhafte Ausführungsarten und Merkmalskombinationen der Erfindung.

### Wege zur Ausführung der Erfindung

### Beispiel 1

Als Beispiel für einen erfindungsgemässen Baustoff in Form einer extrudierbaren plastischen Masse kann angegeben werden:

| | |
|---|---|
| feuchter Lehm mit einem Wassergehalt von 20 Gew.% (bezogen auf den feuchten Lehm) | 82.2 Gew.% |
| Portlandzement | 9.6 Gew.% |
| Strohfasern | 3.4 Gew.% |
| Fliessmittel * | 4.8 Gew.% ** |

| | |
|---|---|
| * Betonverflüssiger auf der Basis eines Vinylpolymerisats | |
| ** wässriges Fliessmittel mit 30 Gew.% Trockengehalt | |

Zur Herstellung dieses Baustoffs werden zunächst die Strohfasern dem feuchten Lehm beigemischt, bis sich ein Feuchtigkeits-Gleichgewicht zwischen den Strohfasern und dem Lehm eingestellt hat. Gleichzeitig dazu oder daran anschliessend wird der Zement im wässrigen Fliessmittel suspendiert. Danach wird die Zementsuspension dem feuchten Lehm (welcher die Strohfasern enthält) beigemischt und in diesem homogen verteilt.

Als Fliessmittel wird ein Betonverflüssiger auf der Basis eines Vinylpolymerisats mit stickstoff- und schwefelhaltigen Gruppen verwendet, das von der schweizerischen Firma Sika AG unter der Bezeichnung Sikament 500 vertrieben wird.

Die plastische Masse gemäss Beispiel 1 ist zur Herstellung von maschinell vorgefertigten Bauteilen in einem Extrudier- und/oder einem Strangpress- und/oder einem Stempelpressverfahren geeignet.

### Beispiel 2

Ein Beispiel für einen erfindungsgemässen Baustoff in Form eines extrudierbaren Mörtels weist folgende Zusammensetzung auf:

| | |
|---|---|
| feuchter Lehm mit einem Wassergehalt von 18.7 Gew.% (bezogen auf den Lehm) | 87.0 Gew.% |
| Portlandzement | 9 Gew.% |
| Strohfasern | 1.5 Gew.% |
| Fliessmittel * (30 Gew.% Trockengehalt) | 2.5 Gew.% |

| | |
|---|---|
| * Polymerisat aus gleichen molaren Mengen von Sulfanilsäure-Natriumsalz, Maleinsäure-Mono-Natriumsalz und Natrium-1-ethynel-2-pyrrolidon-5-carboxylat. | |

Zur Untersuchung der Wirksamkeit des erfindungsgemässen Herstellungsverfahrens wurden Mörtel gemäss dem Beispiel 2 nach den folgenden zwei Verfahren hergestellt:

### Verfahren 1 (erfindungsgemässes Verfahren):

Zunächst wurden die Strohfasern während einer Minute dem feuchten Lehm beigemischt. Dann wurde der Zement im Fliessmittel während zwei Minuten mit einem Labormischer bei ca. 900 Umdrehungen pro Minute suspendiert. Danach wurde die Zement-Suspension während zwei Minuten in einem Hobart-Mischer mit Stufe 2 in den mit den Strohfasern versehenen feuchten Lehm gemischt.

### Verfahren 2:

Sämtliche Mörtelkomponenten wurden während fünf Minuten in einem Hobart-Mischer mit Stufe 2 gemischt.

Anschliessend wurden nach 5, 60 und 120 Minuten ab Fertigstellung der beiden Mörtel ihre Plastizität mit einem Penetrometer bestimmt und daraus der für einen bestimmten

Extruder erforderliche Extrusionsdruck berechnet. Es ergaben sich die folgenden Resultate:

| | | | |
|---|---|---|---|
| Zeit ab Fertigstellung der Mischung [Min] | 5 | 60 | 120 |
| Extrusionsdruck [Bar] bei Mörtel hergestellt nach Verfahren 1 | 10.0 | 10.5 | 10.7 |
| Extrusionsdruck [Bar] bei Mörtel hergestellt nach Verfahren 2 | 10.1 | 14.2 | 15.6 |

Diese Resultate zeigen, dass nach einer vorgängigen Suspension des Zements im wässrigen Fliessmittel der Mörtel gemäss Beispiel 2 während ungefähr zwei Stunden nur unwesentlich ansteift. Demgegenüber setzt das Ansteifen des Mörtels mit der gleichen Zusammensetzung nach einem gleichzeitigen Zusammenmischen aller Komponenten unmittelbar ab der Fertigstellung des Mörtels ein und führt dazu, dass bereits nach einer Stunde ein wesentlich grösserer Extrusionsdruck für eine Verarbeitung des Mörtels mittels eines Extruders erforderlich ist.

Im Zuge von Prüfversuchen wurden aus dem nach Verfahren 1 hergestellten Mörtel gemäss Beispiel 2 anschliessend Prüfkörper (Prismen mit 4x4x16 cm Kantenlänge) gefertigt und während 28 Tagen bei Raumtemperatur gelagert. Danach wurden sie auf eine relative Gleichgewichtigkeitsfeuchte von 50% konditioniert. Die Rohdichte betrug 1880 kg/m³, die Druckfestigkeit 22.8 N/mm² und die Biegezugfestigkeit 7.0 N/mm². Nach 5 zusätzlichen Frost/Tau-Wechseln bei 100% Wassersättigung und anschliessender Konditionierung auf eine relative Gleichgewichtigkeitsfeuchte von wiederum 50% betrug die Druckfestigkeit 21.8 N/mm² und die Biegezugfestigkeit 7.3 N/mm².

### Beispiel 3

Ein Putz gemäss einer bevorzugten Ausführungsart der Erfindung weist folgende Zusammensetzung auf:

| | |
|---|---|
| trockener Lehm * | 68 Gew.% |
| Portlandzement | 10 Gew.% |
| Fliessmittel ** | 1.5 Gew.% |
| Wasser | 20.5 Gew.% |

| | |
|---|---|
| * Lehm, auf über 98 Gew.% getrocknet und pulverisiert, aufweisend 41 Gew.% Anteil Sand mit 0.1 - 0.3 mm Durchmesser und 10 Gew.% Sand mit 1.6 - 2.2 mm Durchmesser | |
| ** Polyvinylpyrrolidon-Pulver mit einem mittleren Molekulargewicht von 7 - 11 Kilo-Dalton (gemessen mittels Gelchromatographie GPC) | |

### Beispiel 4

Die Rezeptur für einen Kleber gemäss einer bevorzugten Ausführungsart der Erfindung sieht folgendermassen aus:

| | |
|---|---|
| trockener Lehm * | 65 Gew.% |
| Portlandzement | 10 Gew.% |
| Fliessmittel ** | 1.5 Gew.% |
| Wasser | 23.5 Gew.% |

| | |
|---|---|
| * Lehm, auf über 98 Gew.% getrocknet und pulverisiert | |
| ** Polyvinylpyrrolidon-Pulver mit einem mittleren Molekulargewicht von 7 - 11 Kilo-Dalton (gemessen mittels Gelchromatographie GPC) | |

Wenn beim Baustoff gemäss Beispiel 4 der Wasseranteil reduziert wird, kann er als Fugenmörtel und/oder als Spachtelmasse verwendet werden.

Für sämtliche der angegebenen Beispiele 1 bis 4 wurde ein Portlandzement mit einer spezifischen Oberfläche nach Blaine von 3290 cm²/g und folgender mineralogischer Zusammensetzung nach Bogue verwendet:

| | |
|---|---|
| C₃S | 51.1% |
| C₂S | 16.1% |
| C₃A | 11.8% |
| C₄AF | 6.5% |
| CaSO₄ | 5.4% |

Zusammenfassend ist festzustellen, dass durch die Erfindung ein ökologisch unbedenklicher und preiswerter Baustoff auf der Basis von Lehm und Zement sowie ein Verfahren zur Herstellung eines solchen Baustoffs angegeben wird, der insbesondere auch zur Herstellung von Bauteilen geeignet ist, die in bauphysikalischer Hinsicht zeitgemässen Anforderungen genügen.

## Patentansprüche

1. Verfahren zur Herstellung eines hydraulisch erhärtenden Baustoffs auf der Basis von Lehm und Zement, **dadurch gekennzeichnet, dass** in einem ersten Schritt ein hydraulischer Zement in einem wässrigen Fliessmittel ausgewählt aus einer von sulfonierten oder nicht sulfonierten Vinylcopolymeren, sulfonierten Polymeren, Gluconsäure, Ligninsulfonat, Triäthanolamin, Glycerin, Polyethylenglykol, Oleat, Polysorbitan, Weinsäure, Phosphaten, Alkyläthoxylat, Polycarboxyläther, Gelatinepulver, oxidativ hydrolisierter Gelatine, Sorbitan-Palmitat-Äthoxylat, in Gluconsäure gelöstem Natriumaiuminat, Vinyl-Polymerisaten mit Pyrrolidon-, Alkohol-, Carboxyl-, aromatischen Sulfonsäuren- bzw. Carboxyläther-Gruppen, Polycarboxylaten und Acrylaten gebildeten Gruppe suspendiert wird, worauf in einem zweiten Schritt die Zementsuspension einem feuchten Lehm beigemischt und in diesem homogen verteilt wird.

2. Verfahren nach Anspruch 1, **dadurch gekennzeichnet, dass** ein feuchter Lehm verwendet wird, dessen Wassergehalt 10 - 25 Gew.%, vorzugsweise 15 - 20 Gew.% beträgt.

3. Verfahren nach Anspruch 1 oder 2, **dadurch gekennzeichnet, dass** als Fliessmittel ein Betonverflüssiger verwendet wird, vorzugsweise ein Betonverflüssiger auf der Basis eines Vinylpolymerisats oder eines Polycarboxyläthers.

4. Verfahren nach einem der Ansprüche 1 bis 3, **dadurch gekennzeichnet, dass** dem wässrigen Fliessmittel oder der Zementsuspension vor dem Beimischen zum Lehm ein Abbindeverzögerer beigemischt wird, wobei der Anteil des Abbindeverzögerers vorzugsweise 0.2 - 5 Gew.% bezogen auf den Zementanteil beträgt.

5. Hydraulisch erhärtender Baustoff auf der Basis von Lehm und Zement, hergestellt durch ein Verfahren nach einem der Ansprüche 1 bis 4, **dadurch gekennzeichnet, dass** er in einem verarbeitungsfähigen, plastischen Zustand Lehm mit einem auf den Baustoff bezogenen Trockengehalt von 66 - 93 Gew.%, 2 - 20 Gew.% hydraulischen Zement, 7 - 25 Gew.%, vorzugsweise 9 - 21 Gew.% Wasser und wenigstens ein Fliessmittel mit einem auf den Baustoff bezogenen Trockengehalt von 0.1 - 5 Gew.%, vorzugsweise 0.2 - 3 Gew.%, insbesondere 0.4 - 2 Gew.% enthält.

6. Baustoff nach Anspruch 5, **dadurch gekennzeichnet, dass** das Fliessmittel ein Betonverflüssiger ist, vorzugsweise ein Betonverflüssiger auf der Basis eines Vinylpolymerisats oder eines Polycarboxyläthers.

7. Baustoff nach Anspruch 5 oder 6, **dadurch gekennzeichnet, dass** der Zementanteil kleiner als 15 Gew.%, vorzugsweise kleiner als 10 Gew.%, insbesondere sogar kleiner als 7 Gew.% ist.

8. Baustoff nach einem der Ansprüche 5 bis 7, **dadurch gekennzeichnet, dass** er zusätzlich organische und/oder anorganische Fasern und/oder Füllstoff enthält, wobei der Faser- bzw. Füllstoffanteil 0.1 - 15 Gew.%, vorzugsweise 1 - 8 Gew.% beträgt.

9. Bauteil aus einem Baustoff auf der Basis von Lehm und Zement nach einem der Ansprüche 5 bis 8, **dadurch gekennzeichnet, dass** der Baustoff aus einer Mischung hergestellt ist, die folgende Zusammensetzung aufweist:
Lehm mit einem auf den Baustoff bezogenen Trockengehalt von 66 - 93 Gew.%;
2 - 20 Gew.% hydraulischer Zement;
7 - 25 Gew.%, vorzugsweise 9 - 21 Gew.% Wasser;
wenigstens ein Fliessmittel mit einem auf den Baustoff bezogenen Trockengehalt von 0.1 - 5 Gew.%, vorzugsweise 0.2 - 3 Gew.%, insbesondere 0.4 - 2 Gew.%;
0 - 15 Gew.% organische und/oder anorganische Fasern und/oder Füllstoff.

10. Bauteil nach Anspruch 9, **dadurch gekennzeichnet, dass** es durch ein Verfahren hergestellt ist, welches einen Schritt des Extrudierens des Baustoffs mittels einer Extrudiervorrichtung umfasst.

11. Verfahren zur Herstellung eines Bauteils aus einem Baustoff auf der Basis von Lehm und Zement, insbesondere nach Anspruch 10, **gekennzeichnet durch** einen Verfahrensschritt, in welchem der Baustoff mittels einer wenigstens teilweise gekühlten Extrudiervorrichtung verarbeitet wird.

12. Verfahren nach Anspruch 11, **dadurch gekennzeichnet, dass** der Baustoff im Bereich der Austrittsöffnung des Extruders geheizt wird, um das Aushärten des extrudierten Bauteils zu beschleunigen.

## Claims

1. Process for the manufacture of a hydraulically hardening building material based on loam and cement, **characterised in that**, in a first step, a hydraulic cement is suspended in an aqueous flow agent selected from a group formed by sulphonated or non-sulphonated vinyl copolymers, sulphonated polymers, gluconic acid, lignosulphonate, triethanolamine, glycerol, polyethylene glycol, oleate, polysorbitan, tartaric acid, phosphates, alkyl ethoxylate, polycarboxyl ether, gelatin powder, oxidatively hydrolysed gelatin, sorbitan palmitate ethoxylate, sodium aluminate dissolved in gluconic acid, vinyl polymers with pyrrolidone, alcohol, carboxyl, aromatic sulphonic acid and carboxyl ether groups, polycarboxylates and acrylates, whereupon, in a second step, the cement suspension is admixed with a moist loam and is distributed homogeneously therein.

2. Process according to claim 1, **characterised in that** a moist loam whose water content is 10-25% by weight, preferably 15-20% by weight, is used.

3. Process according to claim 1 or 2, **characterised in that** a concrete liquefier is used as the flow agent, preferably a concrete liquefier based on a vinyl polymer or a polycarboxyl ether.

4. Process according to any one of claims 1 to 3, **characterised in that** a setting retarder is added to the aqueous flow agent or the cement suspension before it is admixed with the loam, the proportion of the setting retarder being preferably 0.2-5% by weight based on the proportion of cement.

5. Hydraulically hardening building material based on loam and cement, manufactured by a process according to any one of claims 1 to 4, **characterised in that** it contains, in a processable, plastic state, loam having a solids content, based on the building material, of 66-93% by weight, 2-20% by weight hydraulic cement, 7-25% by weight, preferably 9-21% by weight water and at least one flow agent having a solids content, based on the building material, of 0.1-5% by weight, preferably 0.2-3% by weight, especially 0.4-2% by weight.

6. Building material according to claim 5, **characterised in that** the flow agent is a concrete liquefier, preferably a concrete liquefier based on a vinyl polymer or a polycarboxyl ether.

7. Building material according to claim 5 or 6, **characterised in that** the proportion of cement is less than 15% by weight, preferably less than 10% by weight, especially even less than 7% by weight.

8. Building material according to any one of claims 5 to 7, **characterised in that** it additionally contains organic and/or inorganic fibres and/or filler, the proportion of fibre and/or filler being 0.1-15% by weight, preferably 1-8% by weight.

9. Building component comprising a building material based on loam and cement according to any one of claims 5 to 8, **characterised in that** the building material is manufactured from a mixture having the following composition:
loam having a solids content, based on the building material, of 66-93% by weight;
2-20% by weight hydraulic cement;
7-25% by weight, preferably 9-21% by weight water;
at least one flow agent having a solids content, based on the building material, of 0.1-5% by weight, preferably 0.2-3% by weight, especially 0.4-2% by weight;
0-15% by weight organic and/or inorganic fibres and/or filler.

10. Building component according to claim 9, **characterised in that** it is manufactured by a process which includes a step of extruding the building material by means of an extrusion apparatus.

11. Process for the manufacture of a building component from a building material based on loam and cement, especially according to claim 10, **characterised by** a process step in which the building material is processed by means of an at least partially cooled extrusion apparatus.

12. Process according to claim 11, **characterised in that** the building material is heated in the region of the discharge opening of the extruder in order to accelerate the hardening of the extruded building component.

## Revendications

1. Procédé de fabrication d'un matériau de construction à durcissement hydraulique à base de glaise et de ciment, **caractérisé en ce que**, dans une première étape, un ciment hydraulique est mis en suspension dans un agent d'écoulement aqueux choisi dans un groupe formé par les copolymères vinyliques sulfonés ou non sulfonés, les polymères sulfonés, l'acide gluconique, un lignosulfonate, la triéthanolamine, la glycérine, le polyéthylèneglycol, un oléate, le polysorbitan, l'acide tartrique, les phosphates, un éthoxylat d'alkyle, un polycarboxyléther, une poudre de gélatine, la gélatine hydrolysée par oxydation, un éthoxylat de palmitate de sorbitan, l'aluminate de sodium dissous dans l'acide gluconique, les polymères vinyliques avec des groupes pyrrolidone, alcool, carboxyle, acides sulfoniques aromatiques ou carboxyléther, les polycarboxylates et les acrylates, après quoi, dans une deuxième étape, la suspension de ciment est ajoutée à une glaise humide et répartie de manière homogène dans celle-ci.

2. Procédé selon la revendication 1 **caractérisé en ce qu'**une glaise humide dont la teneur en eau est 10-25 % en masse, de préférence 15-20 % en masse, est utilisée.

3. Procédé selon la revendication 1 ou 2 **caractérisé en ce qu'**un fluidifiant pour béton, de préférence un fluidifiant pour béton à base d'un polymère vinylique ou d'un polycarboxyléther, est utilisé comme agent d'écoulement.

4. Procédé selon l'une des revendications 1 à 3 **caractérisé en ce qu'**un retardateur de prise est ajouté à l'agent d'écoulement liquide ou à la suspension de ciment avant l'addition à la glaise, où la proportion de retardateur de prise est de préférence 0,2-5 % en masse par rapport à la proportion de ciment.

5. Matériau de construction à durcissement hydraulique à base de glaise et de ciment, fabriqué par un procédé selon l'une des revendications 1 à 4, **caractérisé en ce que**, dans un état plastique susceptible de mise en oeuvre, il contient de la glaise avec un teneur sèche par rapport au matériau de construction de 66-93 % en masse, 2-20 % en masse de ciment hydraulique, 7-25 % en masse, de préférence 9-21 % en masse d'eau et au moins un agent d'écoulement avec une teneur sèche par rapport au matériau de construction de 0,1-5 % en masse, de préférence 0,2-3 % en masse, en particulier 0,4-2 % en masse.

6. Matériau de construction selon la revendication 5 **caractérisé en ce que** l'agent d'écoulement est un fluidifiant pour béton, de préférence un fluidifiant pour béton à base d'un polymère vinylique ou d'un polycarboxyléther.

7. Matériau de construction selon la revendication 5 ou 6 **caractérisé en ce que** la proportion de ciment est inférieure à 15 % en masse, de préférence inférieure à 10 % en masse, en particulier même inférieure à 7 % en masse.

8. Matériau de construction selon l'une des revendications 5 à 7 **caractérisé en ce qu'**il contient en outre des fibres organiques et/ou inorganiques et/ou une charge, où la proportion de fibres ou de charge est 0,1-15 % en masse, de préférence 1-8 % en masse.

9. Elément de construction en un matériau de construction à base de glaise et de ciment selon l'une des revendications 5 à 8, **caractérisé en ce que** le matériau de construction est fabriqué à partir d'un mélange qui présente la composition suivante :
glaise avec une teneur sèche par rapport au matériau de construction de 66-93 % en masse ;
2-20 % en masse de ciment hydraulique ;
7-25 % en masse, de préférence 9-21 % en masse d'eau ;
au moins un agent d'écoulement avec une teneur sèche par rapport au matériau de construction de 0,1-5 % en masse, de préférence 0,2-3 % en masse, en particulier 0,4-2 % en masse ;
0-15 % en masse de fibres organiques et/ou inorganiques et/ou de charge.

10. Elément de construction selon la revendication 9 **caractérisé en ce qu'**il est fabriqué par un procédé qui comprend une étape d'extrusion du matériau de construction au moyen d'un dispositif d'extrusion.

11. Procédé de fabrication d'un élément de construction à partir d'un matériau de construction à base de glaise et de ciment, en particulier selon la revendication 10, **caractérisé par** une étape de procédé dans laquelle le matériau de construction est mis en oeuvre au moyen d'un dispositif d'extrusion au moins partiellement refroidi.

12. Procédé selon la revendication 11 **caractérisé en ce que** le matériau de construction est chauffé dans le domaine de l'ouverture de sortie de l'extrudeuse pour accélérer le durcissement de l'élément de construction extrudé.
